(19) Europäisches Patentamt
European Patent Office
Office européen des brevets

(11) **EP 3 433 111 B1**

(12) **FASCICULE DE BREVET EUROPEEN**

(45) Date de publication et mention
de la délivrance du brevet:
**15.07.2020 Bulletin 2020/29**

(21) Numéro de dépôt: **17715228.7**

(22) Date de dépôt: **14.03.2017**

(51) Int Cl.:
***B60C 11/03*** *(2006.01)*     ***B60C 11/11*** *(2006.01)*
***B60C 11/12*** *(2006.01)*

(86) Numéro de dépôt international:
**PCT/FR2017/050569**

(87) Numéro de publication internationale:
**WO 2017/162953 (28.09.2017 Gazette 2017/39)**

(54) **BANDE DE ROULEMENT POUR UN PNEU**

LAUFFLÄCHE FÜR EINEN REIFEN

TREAD FOR A TIRE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.03.2016 FR 1652623**

(43) Date de publication de la demande:
**30.01.2019 Bulletin 2019/05**

(73) Titulaire: **Compagnie Générale des
Etablissements Michelin
63000 Clermont-Ferrand (FR)**

(72) Inventeurs:
• **BARBARIN, François
63040 CLERMONT-FERRAND Cedex 9 (FR)**
• **DEMAZIERE, Guillaume
63040 CLERMONT-FERRAND Cedex 9 (FR)**

(74) Mandataire: **Millanvois, Patrick Jacques Jean
Manufacture Française des
Pneumatiques Michelin
CBS/CORP/J/PI - F35 - Ladoux
23, place des Carmes-Déchaux
63040 Clermont-Ferrand Cedex 9 (FR)**

(56) Documents cités:
**EP-A1- 0 668 173     EP-A1- 2 952 362
WO-A1-2015/197429**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

*DOMAINE DE L'INVENTION*

La présente invention concerne une bande de roulement pour pneu de véhicule hors la route portant de très lourdes charges.

*ÉTAT DE LA TECHNIQUE*

Pour assurer une adhérence satisfaisante en motricité et en freinage, il est nécessaire de former sur une bande de roulement une sculpture grâce à un système de rainures plus ou moins complexe. Ces rainures forment un dessin de sculpture à la fois sur la surface dite surface de roulement destinée à venir en contact avec le sol et dans l'épaisseur de la bande.

La demande de brevet publiée sous le numéro WO 2015/197429A1 montre un pneu ayant une bande de roulement de grande largeur appropriée pour un usage intensif comprenant des cycles en charge et des cycles à vide. Cette bande comprend une région centrale et des bords, les bords étant séparés de la région centrale par deux rainures circonférentielles. La région centrale est découpée en lames de matière par une pluralité de rainures transversales ou obliques, chaque lame de matière ayant une hauteur au moins égale à la moitié de la longueur circonférentielle de ces lames de matière et au plus égale à 2.5 fois cette même longueur. Les documents EP 2952362 A1 et EP0668173 A1 font partie de l'état de la technique pouvant être utile à la compréhension de l'invention.

Dans certaines conditions d'usage, les pneus d'engins de génie civil sont utilisés en montage jumelé sur un essieu arrière. Compte tenu de leurs grandes dimensions et notamment leur grande largeur de bande de roulement et des rayons de giration relativement faibles (comparables à ceux que l'on a avec des véhicules poids lourd) on observe que les pneus d'engins de génie civil utilisés en monte jumelée subissent de très fortes contraintes lorsque le véhicule sur lequel ils sont montés est en manœuvre de virage. Il faut remarquer que ce type de manœuvre est très fréquent sur ces véhicules qu'ils soient à vide ou en pleine charge et a une incidence notable sur l'usure (à la fois sur la régularité de l'usure et sur la vitesse d'usure).

Le besoin s'est fait sentir d'améliorer la performance en usure des bandes de roulement des pneus d'engins de génie civil sur essieu moteur avec monte jumelée tout en favorisant une bonne mise à plat de la structure de renforcement du pneu, cette structure de renforcement comprenant radialement sous la bande de roulement une pluralité de couches de matière renforcées par des câbles orientés selon des directions appropriées.

Définitions :

Par direction radiale, on entend dans le présent document une direction qui est perpendiculaire à l'axe de rotation du pneu (cette direction correspond à la direction de l'épaisseur de la bande de roulement).

Plan radial : plan contenant l'axe de rotation du pneu.

Plan médian équatorial : plan perpendiculaire à l'axe de rotation du pneu et divisant le pneu en deux moitiés égales.

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Une nervure est un élément de matière en relief formé sur une bande de roulement, cet élément de matière s'étendant dans la direction circonférentielle et fait en général le tour du pneu. Une nervure comprend deux parois latérales et une face de contact, cette dernière formant une partie de la surface de roulement de la bande pour venir en contact avec la chaussée pendant le roulage.

Dans ce document, les rainures sont des espaces créés pendant le moulage entre des parois de matière en vis-à-vis, ces parois étant reliées entre elles par un fond. Ces rainures peuvent prendre différentes largeurs et profondeurs.

Une bande de roulement a une épaisseur maximale Ht de matière à user en roulage. Une fois cette épaisseur maximale atteinte le pneu peut être remplacé par un pneu neuf ou bien rechapé, c'est-à-dire être pourvu d'une nouvelle bande de roulement. Le volume de matière à user correspond pour les pneus de l'invention à la quantité de matière située entre la surface de roulement à l'état neuf et une surface virtuelle parallèle à la surface de roulement à l'état neuf et passant par les points les plus à l'intérieur des rainures formées dans la bande de roulement.

Le taux de creux surfacique d'une sculpture est égal au rapport entre la surface des creux formés par les rainures et la surface totale (surface de contact des éléments de relief et surface des creux). Un taux de creux faible indique une grande surface de contact des éléments de relief et une faible surface de creux entre ces éléments.

Le taux de creux volumique d'une sculpture d'une bande de roulement à l'état neuf est égal au rapport entre le volume des rainures formées dans la bande de roulement et le volume total de ladite bande comprenant le volume de matière à user et le volume des rainures. Un taux de creux volumique faible indique un faible volume de creux relativement au volume de matière à user de la bande de roulement. De la même façon, il est possible de définir un taux volumique pour une région d'une bande de roulement, cette région étant délimitée axialement.

Les conditions usuelles de roulage du pneu ou conditions d'utilisation sont celles qui sont définies notamment par la norme E.T.R.T.O. pour un usage européen ou toute norme équivalente selon le pays concerné ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

*BREF EXPOSE DE L INVENTION*

La présente invention vise à proposer une bande de roulement pour pneu de véhicules hors la route portant de très lourdes charges. La bande de roulement selon l'invention est pourvue d'une sculpture permettant à la fois une amélioration de la performance en usure tout en conservant une adhérence appropriée et cela quel que soit l'état d'usure de cette bande. Cette invention est applicable plus particulièrement aux bandes de roulement de grande largeur, à savoir une largeur au moins égale à 600 mm, destinées à des pneus utilisés au moins en partie en monte jumelée sur un essieu arrière d'un véhicule hors la route tel un engin de génie civil.

Pour mémoire, l'usage de ces engins de génie civil est particulièrement contrasté en termes de charge supportée sur chacun de ses pneus : trajet aller en pleine charge suivi d'un trajet retour à vide. Lors des phases de roulage à vide, la charge supportée par chaque pneu de l'essieu arrière est divisée par environ trois en comparaison avec la charge supportée lors d'une phase de roulage en pleine charge. En outre, lors des phases de roulage à vide, on constate une répartition différente des efforts exercés par le sol sur la largeur de la bande de roulement (on peut notamment constater une réduction plus marquée aux épaules du pneu).

À cet effet, l'invention a pour objet une bande de roulement pour pneu de véhicule hors la route portant de très lourdes charges.

Cette bande de roulement a une largeur totale Wt supérieure à 600 mm et une épaisseur Ht de matière à user, cette bande de roulement étant pourvue d'au moins trois rainures principales d'orientation générale circonférentielle et de profondeur au moins égale à 60 mm. Ces au moins trois rainures principales divisent la bande de roulement en nervures intermédiaires et en nervures de bord, les nervures de bord délimitant axialement la bande de roulement et ayant une largeur au plus égale au quart de la largeur totale Wt de la bande.

Au moins une des nervures intermédiaires est pourvue d'une pluralité de rainures fines ayant une profondeur H1 et délimitant des lames de matière de longueur circonférentielle moyenne B1 inférieure à deux fois la profondeur H1. Ces rainures fines sont orientées dans la direction transversale correspondant à la direction axiale du pneu ou dans une direction oblique, c'est à dire selon une orientation faisant un angle au plus égal à 45 degrés avec la direction transversale ou axiale du pneu. Chaque nervure intermédiaire a une largeur moyenne qui est au plus égale au quart de la largeur totale Wt de la bande de roulement et est au moins égale à 0.75 fois l'épaisseur Ht de matière à user.

Cette bande de roulement est caractérisée en ce que les rainures fines ont, sur une hauteur H12 au moins égale à 65% de leur profondeur H1, une largeur qui est au plus égale à la valeur obtenue à partir de l'expression mathématique suivante : $0.04\sqrt{B1.H1}$ (Quatre pour cent de la racine carrée du produit de B1 par H1).

Préférentiellement l'angle des rainures fines est au plus égal à 20 degrés avec la direction transversale du pneu.

Il est connu notamment par le document WO 2015/197429A1 que des rainures fines satisfaisant la relation selon laquelle la profondeur H1 est au moins égale à 0.5 fois la longueur circonférentielle moyenne B1 des lames de matières délimitées par les rainures fines sont favorables sur la performance en usure des pneus soumis à des couples moteur. Dans le cas de virages de faible rayon de giration, les efforts appliqués par le sol sur la bande de roulement dans la direction d'avancement peuvent être très élevés, d'où il résulte une sollicitation en cisaillement des lames de matière plus grande en virage que lors des phases de passage de couple, notamment sous couple moteur.

Grâce à la condition posée sur la largeur maximale des rainures fines, il est possible de générer une pression de contact très élevée entre les parois délimitant les rainures fines, ce qui permet d'atténuer la diminution de rigidité de la bande résultant de la présence même de ces rainures fines en réalisant un blocage mécanique des parois en vis-à-vis afin de limiter le plus possible les glissements entre lesdites parois.

La limitation de largeur des nervures est essentielle pour que l'amplitude de variation des efforts sur la largeur de chaque lame de matière soit limitée lors d'un virage de faible rayon de giration.

De façon préférentielle, les nervures intermédiaires pourvues de rainures fines sont telles que la longueur circonférentielle moyenne B1 entre deux rainures fines est au plus égale à la profondeur H1 et au moins égale à 0,4 fois cette même profondeur H1.

De façon préférentielle, chaque rainure principale circonférentielle a une largeur au moins égale à 6 % de sa profondeur de façon à pouvoir se fermer dans le passage du contact avec le sol et générer des pressions de contact entre les parois en vis-à-vis. Encore plus préférentiellement, la largeur de chaque rainure principale circonférentielle est au plus égale à 15% de sa profondeur.

De façon préférentielle, la profondeur H1 des rainures fines est égale ou proche de la profondeur des rainures principales circonférentielles.

De manière connue et afin de limiter encore la réduction de rigidité de la bande liée à la présence de cette pluralité de rainures fines, il est judicieux de prévoir qu'au moins une partie des rainures fines comportent en outre des moyens de blocage des mouvements relatifs des parois en vis-à-vis délimitant ces rainures fines. Ces moyens de blocage sont d'autant plus utiles que le rapport B1/H1 diminue et qu'en fonction de l'usage le coefficient de frottement entre les parois des rainures fines peut diminuer du fait de la présence de corps étrangers.

Dans une variante de l'invention, les nervures de bord délimitant axialement la bande de roulement peuvent être pourvues d'une pluralité de rainures larges et de rainures fines de profondeur moyenne H2 délimitant des blocs de longueur circonférentielle moyenne B2, la profondeur moyenne H2 étant inférieure à 1.2 fois la longueur circonférentielle moyenne B2, chaque rainure fine ayant une largeur moyenne qui est inférieure à la valeur de l'expression : $0.04\sqrt{B2.H2}$

Dans une autre variante la bande de roulement peut comprendre parmi les nervures intermédiaires au moins une nervure dépourvue de toute rainure fine.

De même une bande de roulement selon l'invention peut comprendre au moins une nervure intermédiaire pourvue de rainures larges orientées transversalement ou obliquement.

Dans une variante de l'invention, toutes les nervures intermédiaires sont pourvues de rainures fines.

Dans une autre variante de l'invention, les rainures fines formées sur les nervures intermédiaires ont des largeurs variables entre la surface de roulement à neuf et le fond de ces rainures fines tout en respectant, entre la surface de roulement et le fond, la relation mathématique : $0.04\sqrt{B1.H1}$.

Préférentiellement, les rainures fines ont une orientation faisant un angle au plus égal à 20 degrés avec la direction transversale ou axiale du pneu pour être plus efficace en usure.

Dans une autre variante intéressante la profondeur H1 des rainures fines dans la zone intermédiaire est inférieure à la profondeur des rainures dans la zone bord dans le but d'obtenir un bon compromis entre l'échauffement des régions de bord et la résistance aux agressions en région centrale.

La valeur de B1 peut être sensiblement similaire pour toutes les nervures intermédiaires ou peut varier d'une nervure intermédiaire à une autre. En particulier, il peut être avantageux d'avoir un ratio H1/B1 plus grand pour les nervures les plus proches du plan médian équatorial quand il y a au moins trois nervures intermédiaires.

L'invention est utilisée dans des pneus pour véhicules portant de lourdes charges comme des véhicules destinés à des usages hors la route c'est à dire hors du réseau routier, notamment dans des mines.

D'autres caractéristiques et avantages de l'invention ressortent de la description faite ci-après en référence aux dessins annexés qui montrent, à titre d'exemples non limitatifs, des formes de réalisation de l'objet de l'invention.

*BREVE DESCRIPTION DES FIGURES*

La figure 1 montre une vue partielle de la surface de roulement d'une bande de roulement d'un pneumatique selon l'invention ;

La figure 2 montre une coupe dans un plan radial, la bande de roulement montrée avec la figure 1 ;

La figure 3 montre une vue partielle de la surface de roulement d'une bande de roulement selon une autre variante de l'invention ayant fait l'objet de tests ;

La figure 4 montre une vue en coupe dans un plan dont la trace avec la figure 3 est indiquée par la ligne IV-IV ;

La figure 5 montre une vue en coupe dans un plan dont la trace avec la figure 3 est indiquée par la ligne V-V.

*DESCRIPTION DES FIGURES*

Pour faciliter la lecture des figures, des mêmes signes de référence sont employés pour la description de variantes de l'invention dès lors que ces signes de référence renvoient à des éléments d'une même nature qu'elle soit structurelle ou bien fonctionnelle.

Bien entendu, les figures servent de support à la description sans toutefois prétendre montrer les variantes avec un quelconque facteur d'échelle.

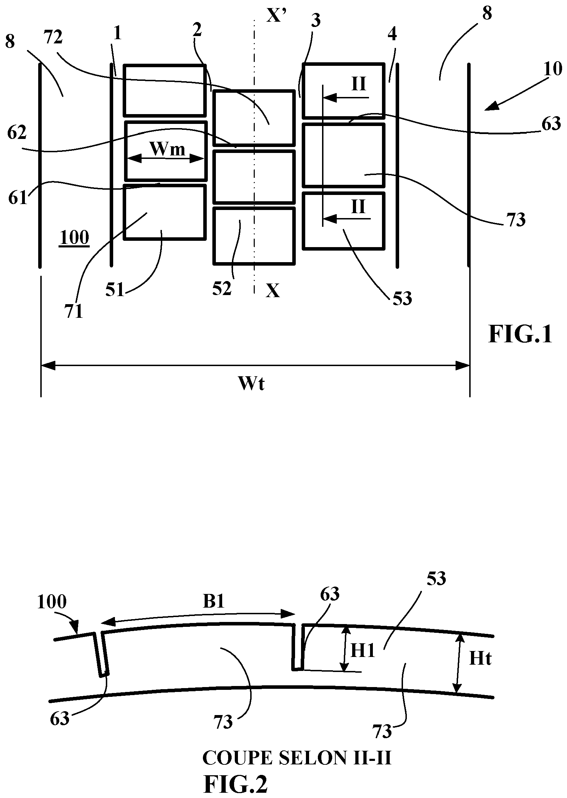

La figure 1 montre une vue partielle d'une bande de roulement 10 d'un pneu selon l'invention destiné à équiper dans une première phase l'essieu avant d'un véhicule hors la route de type tombereau rigide (« *dumper* » en langue anglaise) pour porter de très lourdes charges puis dans un second temps l'essieu arrière d'un véhicule similaire. Ce pneu radial de dimension 40.00 R 57 comprend une bande de roulement 10 destinée à assurer une liaison entre le pneu et le sol sur lequel roule le véhicule.

Cette bande de roulement 10 a une largeur totale Wt supérieure à 600 mm et à une surface de roulement 100 destinée à venir en contact avec le sol. Cette bande présente une épaisseur totale Ht de matière à user qui est au moins égale à 60 mm.

Cette bande de roulement 10 comprend quatre rainures principales circonférentielles 1, 2, 3, 4 de largeur moyenne au moins égale à 6 mm sur la surface de roulement du pneu à l'état neuf et de profondeur au plus égale à l'épaisseur de matière à user.

Ces rainures principales circonférentielles 1, 2, 3, 4 sont disposées de manière symétrique par rapport au plan médian équatorial repéré par la ligne XX' sur la figure 1.

Ces quatre rainures principales 1, 2, 3, 4 délimitent trois nervures intermédiaires 51, 52, 53 et deux nervures de bord 8 délimitant axialement la bande de roulement.

Les trois nervures intermédiaires ont une même largeur qui est inférieure au quart de la largeur totale de la bande de roulement. Chacune de ces trois nervures est pourvue d'une pluralité de rainures fines, respectivement 61, 62, 63, ces rainures fines étant orientées dans la direction transversale perpendiculaire à la direction circonférentielle et donc parallèle à la direction de l'axe de rotation du pneu pourvu de cette bande. Chaque rainure fine transversale 61, 62, 63 s'ouvre de part et d'autre dans une rainure principale circonférentielle. Par ailleurs, ces rainures fines transversales sont décalées les unes des autres dans la direction circonférentielle d'une rangée à l'autre.

Ces rainures fines transversales 61, 62, 63 avec les rainures principales circonférentielles délimitent dans chaque rangée circonférentielle 51, 52, 53 une pluralité d'éléments ou lame de matière 71, 72, 73 respectivement dont la hauteur moyenne correspond à la profondeur moyenne H1 desdites rainures fines.

Par ailleurs la largeur de nervures intermédiaires pourvues de rainures fines est au moins égale à 0.75 fois l'épaisseur Ht de matière à user.

La longueur circonférentielle moyenne B1 est définie comme étant inférieure à la profondeur H1 des rainures fines. Dans cette variante les largeurs des rainures fines ont des largeurs au plus égale à la valeur de l'expression mathématique : $0.04\sqrt{B1.H1}$.

Axialement à l'extérieur les nervures de bord sont continues circonférentiellement et dépourvues de rainures.

Sur la figure 2 montrant une vue partielle selon une coupe dans un plan radial, cette coupe étant repérée par sa trace II-II sur la figure 1, on voit la répartition des rainures fines 63 formée dans la nervure circonférentielle 53.

Ces rainures fines 63 délimitent avec les rainures principales 3 et 4 une pluralité d'éléments de matière 73 ayant une hauteur égale à la profondeur H1 des incisions et une longueur circonférentielle B1 sur la surface de roulement 100. Dans la variante décrite, les autres rainures fines transversales 61, 62 ont les mêmes caractéristiques dimensionnelles ; bien entendu la personne du métier peut créer des variations de ces caractéristiques en fonction de l'objectif recherché.

Sous des conditions d'usage, on observe une fermeture partielle des rainures fines lors du passage dans la région de contact avec le sol ; le contact des parois en vis-à-vis des rainures fines affecte environ au moins 65% de la surface desdites parois (c'est-à-dire qu'il y a contact sur au moins 65%).

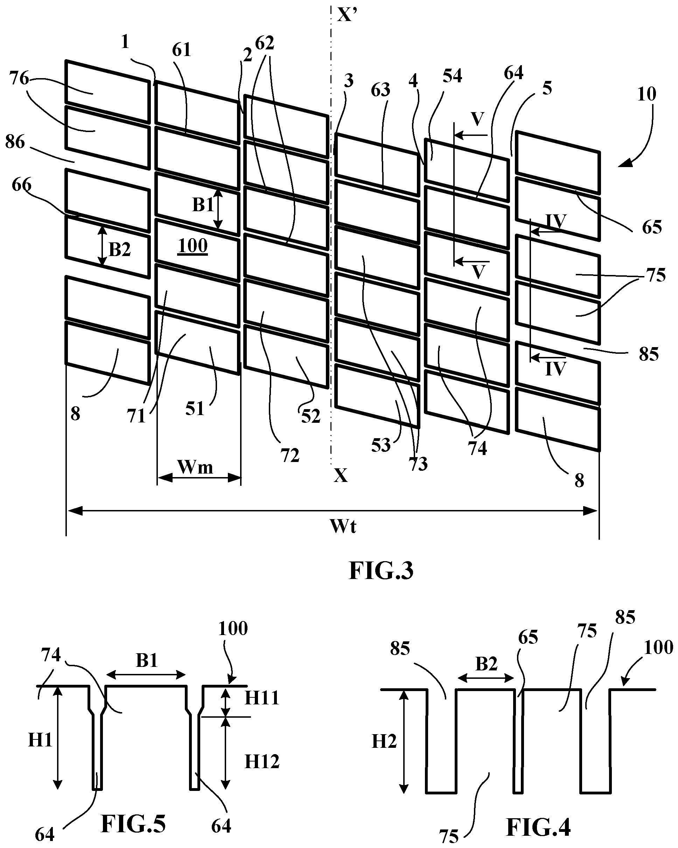

La figure 3 montre une autre variante de bande de roulement selon l'invention ayant fait l'objet de tests. Cette bande de roulement 10 pour un pneu radial de dimension 40.00 R 57 destiné à équiper dans une première phase l'essieu avant d'un véhicule hors la route de type tombereau rigide (« dumper » en langue anglaise) pour porter de très lourdes charges puis dans un second temps l'essieu arrière d'un véhicule similaire.

Cette bande de roulement a une largeur totale Wt égale à 999 mm et est destinée à venir en contact avec le sol par l'intermédiaire d'une surface de roulement 100 pendant le roulage.

Cette bande de roulement 10 comprend cinq rainures principales circonférentielles 1, 2, 3, 4, 5 de largeur moyenne égale à 8 mm à l'exception de la rainure en position médiane laquelle a une largeur moyenne égale à 10 mm à l'état neuf. Ces rainures principales ont une profondeur égale à 102 mm à l'exception des rainures principales les plus à l'extérieur axialement, ces dernières ayant une profondeur égale à 108 mm. Ces rainures principales ont des largeurs appropriées à la fois pour se fermer et générer des pressions de contact entre leurs parois en vis-à-vis lors du passage dans le contact tout en permettant une évacuation thermique suffisante hors du contact.

Ces rainures principales circonférentielles 1, 2, 3, 4, 5 génèrent quatre nervures intermédiaires et deux nervures de bord, ces nervures de bord limitant axialement la bande de roulement en largeur. Les nervures bord ont une largeur moyenne égale à 135 mm tandis que les nervures intermédiaires ont une largeur moyenne égale à 172 mm pour les plus proches des nervures bord et 174 mm pour les nervures plus proches du plan médian équatorial dont la trace sur la figure est indiquée par la ligne XX'.

Chaque nervure intermédiaire est pourvue d'une pluralité de rainures fines de largeur 2.5 mm se prolongeant dans l'épaisseur de la bande de roulement sur une hauteur H1. Ces rainures fines de faible largeur sont orientées obliquement c'est à dire selon une direction faisant un angle de 15 degrés avec l'axe de rotation du pneu. Ces rainures fines délimitent avec les rainures principales circonférentielles une pluralité de lames de matière dont la longueur circonférentielle moyenne B1 mesurée dans la direction direction circonférentielle est égale à la hauteur moyenne des lames. Cette hauteur moyenne correspond à la profondeur moyenne desdites rainures fines.

Dans cette variante toutes les nervures intermédiaires sont divisées de la même manière en éléments de matière dont la longueur circonférentielle moyenne B1 est égale à 60 mm et dont la hauteur H1 est égale à 101 mm.

Comme on peut le voir avec la figure 5 montrant une coupe selon un plan dont la trace est selon la ligne V-V sur la figure 3, les rainures fines comportent une partie de hauteur H12 égale à 71 mm sur laquelle leur largeur est égale à 2.5 mm et en complément une partie plus large de hauteur H11 égale à 30 mm. Sur cette partie plus large proche de la surface de roulement à neuf, la largeur ne satisfait pas la relation $0.04\sqrt{B1.H1}$

Dans la variante décrite, toutes les lames de matière d'une nervure intermédiaire sont de même longueur circonférentielle B1 et il en est de même pour les autres nervures intermédiaires. Bien entendu l'invention ici décrite englobe les variantes selon lesquelles les longueurs circonférentielles B1 des lames de matière peuvent être différentes que ce soit sur une même nervure ou entre différentes nervures tout en satisfaisant la relation imposée par l'invention, à savoir que pour chaque nervure intermédiaire, la largeur des rainures fines est inférieure à $0.04\sqrt{B1.H1}$

Dans cette variante montrée avec la figure 3, chaque nervure de bord est pourvue d'une pluralité de rainures larges ayant pour largeur moyenne 45 mm et de même profondeur que les rainures principales circonférentielles séparant les bords des nervures intermédiaires, c'est à dire 108 mm. En alternance avec ces rainures larges il est prévu de disposer des rainures étroites de largeur 2.5 mm. La figure 4 montre une coupe selon un plan dont la trace sur la figure 3 est matérialisée par la ligne IV-IV.

Grâce à cette structure, le pneu présente une performance usure significativement augmentée aussi bien en ligne droite qu'en virage, tout en conservant des performances en thermique et en adhérence équivalentes au témoin cela quel que soit l'état d'usure de la bande de roulement.

Ayant décrit l'invention avec le support de ces deux variantes, cette invention ne saurait être limitée à ces seuls exemples et diverses modifications peuvent y être apportées sans sortir du cadre défini par les revendications.

## Revendications

1. Bande de roulement (10) pour pneu de véhicule hors la route portant de très lourdes charges, cette bande de roulement (10) ayant une largeur totale Wt supérieure à 600 mm et une épaisseur Ht de matière à user, cette bande de roulement (10) étant pourvue d'au moins trois rainures principales (1, 2, 3, 4) d'orientation générale circonférentielle et de profondeur au moins égale à 60 mm, ces au moins trois rainures principales (1, 2, 3, 4) divisant la bande de roulement (10) en nervures intermédiaires (51, 52, 53) et en nervures de bord (8), les nervures de bord (8) délimitant axialement la bande de roulement (10), ces nervures de bord (8) ayant une largeur au plus égale au quart de la largeur totale Wt de la bande de roulement (10), au moins une des nervures intermédiaires (51, 52, 53) est pourvue d'une pluralité de rainures fines (61, 62, 63), chaque rainure fine (61, 62, 63) s'ouvre de part et d'autre dans une rainure principale (1, 2, 3, 4) et a une profondeur H1, ces rainures fines (61, 62, 63) délimitant avec les rainures principales respectives (1, 2, 3, 4) des lames de matière (71, 72, 73) de longueur circonférentielle moyenne B1 inférieure à deux fois la profondeur H1, ces rainures fines (61, 62, 63) étant orientées dans la direction transversale correspondant à la direction axiale du pneu ou dans une direction oblique, c'est à dire selon une orientation faisant un angle au plus égal à 45 degrés avec la direction transversale ou axiale du pneu, chaque nervure intermédiaire (51, 52, 53) ayant une largeur moyenne qui est au plus égale au quart de la largeur totale $W_t$ de la bande de roulement (10) et est au moins égale à 0.75 fois l'épaisseur H1 de matière à user, cette bande de roulement (10) est **caractérisée en ce que** : les rainures fines (61, 62, 63) ont, sur une hauteur H12 au moins égale à 65% de leur profondeur H1, une largeur qui est au plus égale à la valeur obtenue à partir de l'expression mathématique suivante :

$$0.04\sqrt{B1.H1}\,.$$

2. Bande de roulement (10) selon la revendication 1 **caractérisée en ce que** l'angle des rainures fines (61, 62, 63) est au plus égal à 20 degrés avec la direction transversale du pneu.

3. Bande de roulement (10) selon la revendication 1 ou la revendication 2 **caractérisée en ce que** les nervures intermédiaires (51, 52, 53) pourvues de rainures fines (61, 62, 63) sont telles que la longueur circonférentielle moyenne B1 entre deux rainures fines (61, 62, 63) est au plus égale à la profondeur H1 et au moins égale à 0,4 fois cette même profondeur H1.

4. Bande de roulement (10) selon l'une des revendications 1 à 3 **caractérisée en ce que** chaque rainure principale (1, 2, 3, 4) circonférentielle a une largeur au moins égale à 6% de sa profondeur de façon à pouvoir se fermer dans le passage du contact avec le sol et générer des pressions de contact entre les parois en vis-à-vis.

5. Bande de roulement (10) selon la revendication 4 **caractérisée en ce que** chaque rainure principale (1, 2, 3, 4) circonférentielle a une largeur au plus égale à 15% de sa profondeur.

6. Bande de roulement (10) selon l'une quelconque des revendications 1 à 5 **caractérisée en ce que** la profondeur H1 des rainures fines (61, 62, 63) est égale ou proche de la profondeur des rainures principales (1, 2, 3, 4) circonférentielles.

7. Bande de roulement (10) selon l'une quelconque des revendications 1 à 6 **caractérisée en ce que** les nervures de bord (8) délimitant axialement la bande de roulement (10) sont pourvues d'une pluralité de rainures larges (85, 86) et de rainures fines (65, 66) de profondeur moyenne H2 délimitant des blocs (75, 76) de longueur circonférentielle moyenne B2, la profondeur moyenne H2 étant inférieure à 1.2 fois la longueur circonférentielle moyenne B2, chaque rainure fine (65, 66) ayant une largeur moyenne qui est inférieure à la valeur de l'expression :

$$0.04\sqrt{B2.H2}$$

8. Bande de roulement (10) selon l'une quelconque des revendications 1 à 7 **caractérisée en ce qu'**au moins une nervure intermédiaire est dépourvue de toute rainure fine.

9. Bande de roulement (10) selon l'une quelconque des revendications 1 à 7 **caractérisée en ce qu'**au moins une nervure intermédiaire est pourvue de rainures larges orientées transversalement ou obliquement.

10. Bande de roulement (10) selon l'une quelconque des revendications 1 à 7 **caractérisée en ce que** toutes les nervures intermédiaires (51, 52, 53) sont pourvues de rainures fines (61, 62, 63).

11. Bande de roulement (10) selon l'une quelconque des revendications 1 à 10 **caractérisée en ce que** les rainures fines (61, 62, 63) formées sur les nervures intermédiaires (51, 52, 53) ont des largeurs variables entre la surface de roulement à neuf et le fond de ces rainures fines (61, 62, 63) tout en respectant, entre la surface de roulement et le fond, la relation mathématique : $0.04\sqrt{B1.H1}.$

**Patentansprüche**

1. Laufstreifen (10) für einen Reifen eines Offroad-Fahrzeugs, das sehr schwere Lasten trägt, wobei dieser Laufstreifen (10) eine Gesamtbreite Wt, die größer als 600 mm ist, und eine Dicke Ht von abzunutzendem Material aufweist, wobei dieser Laufstreifen (10) mit wenigstens drei Hauptrillen (1, 2, 3, 4) versehen ist, die im Wesentlichen in Umfangsrichtung ausgerichtet sind und eine Tiefe von wenigstens 60 mm aufweisen, wobei diese wenigstens drei Hauptrillen (1, 2, 3, 4) den Laufstreifen (10) in Zwischenrippen (51, 52, 53) und in Randrippen (8) aufteilen, wobei die Randrippen (8) den Laufstreifen (10) axial begrenzen, wobei diese Randrippen (8) eine Breite aufweisen, die höchstens gleich einem Viertel der Gesamtbreite Wt des Laufstreifen (10) ist, wobei wenigstens eine der Zwischenrippen (51, 52, 53) mit mehreren feinen Rillen (61, 62, 63) versehen ist, wobei sich jede feine Rille (61, 62, 63) auf beiden Seiten in eine Hauptrille (1, 2, 3, 4) öffnet und eine Tiefe H1 aufweist, wobei diese feinen Rillen (61, 62, 63) mit den jeweiligen Hauptrillen (1, 2, 3, 4) Materiallamellen (71, 72, 73) mit einer mittleren Länge in Umfangsrichtung B1 begrenzen, die kleiner als das Zweifache der Tiefe H1 ist, wobei diese feinen Rillen (61, 62, 63) in der Querrichtung, die der axialen Richtung des Reifens entspricht, ausgerichtet sind, oder in einer schrägen Richtung, das heißt mit einer Ausrichtung, die einen Winkel von höchstens 45 Grad mit der Querrichtung oder axialen Richtung des Reifens bildet, wobei jede Zwischenrippe (51, 52, 53) eine mittlere Breite aufweist, welche höchstens gleich einem Viertel der Gesamtbreite Wt des Laufstreifen (10) ist und mindestens gleich dem 0,75-Fachen der Dicke Ht von abzunutzendem Material ist,

wobei dieser Laufstreifen (10) **dadurch gekennzeichnet ist, dass**:
die feinen Rillen (61, 62, 63) auf einer Höhe H12, die mindestens gleich 65 % ihrer Tiefe H1 ist, eine Breite aufweisen, welche höchstens gleich dem Wert ist, der aus dem folgenden mathematischen Ausdruck erhalten wird: $0,04\ \sqrt{B1\cdot H1}.$

2. Laufstreifen (10) nach Anspruch 1, **dadurch gekennzeichnet, dass** der Winkel der feinen Rillen (61, 62, 63) mit der Querrichtung des Reifens höchstens 20 Grad beträgt.

3. Laufstreifen (10) nach Anspruch 1 oder Anspruch 2, **dadurch gekennzeichnet, dass** die mit feinen Rillen (61, 62, 63) versehenen Zwischenrippen (51, 52, 53) so beschaffen sind, dass die mittlere Länge in Umfangsrichtung B1 zwischen zwei feinen Rillen (61, 62, 63) höchstens gleich der Tiefe H1 und mindestens gleich dem 0,4-Fachen dieser Tiefe H1 ist.

4. Laufstreifen (10) nach einem der Ansprüche 1 bis 3, **dadurch gekennzeichnet, dass** jede in Umfangsrichtung verlaufende Hauptrille (1, 2, 3, 4) eine Breite aufweist, die mindestens gleich 6 % ihrer Tiefe ist, so dass sie sich beim Durchlaufen des Kontakts mit dem Boden schließen und Kontaktdrücke zwischen den einander gegenüberliegenden Wänden erzeugen kann.

5. Laufstreifen (10) nach Anspruch 4, **dadurch gekennzeichnet, dass** jede in Umfangsrichtung verlaufende Hauptrille (1, 2, 3, 4) eine Breite aufweist, die höchstens gleich 15 % ihrer Tiefe ist.

6. Laufstreifen (10) nach einem der Ansprüche 1 bis 5, **dadurch gekennzeichnet, dass** die Tiefe H1 der feinen Rillen (61, 62, 63) gleich der Tiefe der in Umfangsrichtung verlaufenden Hauptrillen (1, 2, 3, 4) ist oder dieser nahekommt.

**7.** Laufstreifen (10) nach einem der Ansprüche 1 bis 6, **dadurch gekennzeichnet, dass** die Randrippen (8), die den Laufstreifen (10) axial begrenzen, mit mehreren breiten Rillen (85, 86) und feinen Rillen (65, 66) mit einer mittleren Tiefe H2 versehen sind, welche Blöcke (75, 76) mit einer mittleren Länge in Umfangsrichtung B2 begrenzen, wobei die mittlere Tiefe H2 kleiner als das 1,2-Fache der mittleren Länge in Umfangsrichtung B2 ist, wobei jede feine Rille (65, 66) eine mittlere Breite aufweist, welche kleiner als der Wert des folgenden Ausdrucks ist:

$$0,04 \sqrt{B2 \cdot H2}.$$

**8.** Laufstreifen (10) nach einem der Ansprüche 1 bis 7, **dadurch gekennzeichnet, dass** wenigstens eine Zwischenrippe mit keiner feinen Rille versehen ist.

**9.** Laufstreifen (10) nach einem der Ansprüche 1 bis 7, **dadurch gekennzeichnet, dass** wenigstens eine Zwischenrippe mit breiten Rillen versehen ist, die quer oder schräg ausgerichtet sind.

**10.** Laufstreifen (10) nach einem der Ansprüche 1 bis 7, **dadurch gekennzeichnet, dass** alle Zwischenrippen (51, 52, 53) mit feinen Rillen (61, 62, 63) versehen sind.

**11.** Laufstreifen (10) nach einem der Ansprüche 1 bis 10, **dadurch gekennzeichnet, dass** die an den Zwischenrippen (51, 52, 53) ausgebildeten feinen Rillen (61, 62, 63) Breiten aufweisen, die zwischen der Lauffläche im Neuzustand und dem Boden dieser feinen Rillen (61, 62, 63) variabel sind, wobei sie gleichzeitig zwischen der Lauffläche und dem Boden der folgenden mathematischen Beziehung genü-

gen: $0,04 \sqrt{B1 \cdot H1}.$

**Claims**

**1.** Tread (10) for a tyre of an off-road vehicle carrying very heavy loads, this tread (10) having a total width Wt greater than 600 mm and a thickness Ht of material to be worn away, this tread (10) being provided with at least three main grooves (1, 2, 3, 4) of circumferential overall orientation and with a depth at least equal to 60 mm, these at least three main grooves (1, 2, 3, 4) dividing the tread into intermediate ribs (51, 52, 53) and edge ribs (8), the edge ribs (8) axially bounding the tread (10), these edge ribs (10) having a width at most equal to one quarter of the total width Wt of the tread (10), at least one of the intermediate ribs (51, 52, 53) being provided with a plurality of fine grooves (61, 62, 63); each fine groove (61, 62, 63) opening into a main groove (1, 2, 3, 4) and having a depth HI, these fine grooves (61, 62, 63), with the main grooves (1, 2, 3, 4), delimiting blades of material (71, 72, 73) of mean width B1 less than twice the depth HI, these fine grooves (61, 62, 63) being oriented in the transverse direction corresponding to the axial direction of the tyre or in an oblique direction, namely with an orientation that makes an angle at most equal to 45 degrees with the transverse or axial direction of the tyre, each intermediate rib (51, 52, 53) having a mean width at most equal to one quarter of the total width Wt of the tread (10) and at least equal to 0.75 times the thickness Ht of material to be worn away, this tread being **characterized in that**:

the fine grooves, (61, 62, 63) have, over a height H12 at least equal to 65% of their total depth HI, a width which is at most equal to the value obtained from the following mathematical expression:

$$0.04\sqrt{B1. H1}.$$

**2.** Tread (10) according to Claim 1, **characterized in that** the angle of the fine grooves (61, 62, 63) is at most equal to 20 degrees with respect to the transverse direction.

**3.** Tread (10) according to Claim 1 or Claim 2, **characterized in that** the intermediate ribs (51, 52, 53) provided with fine grooves (61, 62, 63) are such that the circumferential mean length B1 between two fine grooves (61, 62, 63) is at most equal to the depth H1 and at least equal to 0.4 times this same depth H1.

**4.** Tread (10) according to one of Claims 1 to 3, **characterized in that** each circumferential main groove (1, 2, 3, 4) has a width at least equal to 6% of its depth so as to be able to close up when it enters the contact patch in which it is in contact with the ground and generate contact pressures between the opposing walls.

**5.** Tread (10) according to Claim 4, **characterized in that** each circumferential main groove (1, 2, 3, 4) has a width at most equal to 15% of its depth.

**6.** Tread (10) according to any one of Claims 1 to 5, **characterized in that** the depth H1 of the fine grooves (61, 62, 63) is equal or similar to the depth of the circumferential main grooves (1, 2, 3, 4) .

**7.** Tread (10) according to any one of Claims 1 to 6, **characterized in that** the edge ribs (8) axially delimiting the tread (10) are provided with a plurality of wide grooves (85, 86) and of fine grooves (65, 66) of mean depth H2 delimiting blocks (75, 76) of mean width B2, the depth H2 being less than 1.2 times the circumferential mean length B2, each fine groove (65, 66) having a mean width which is less than the value of the expression: $0.04\sqrt{B2.H2}.$

8. Tread (10) according to any one of Claims 1 to 7, **characterized in that** at least one intermediate rib has no fine groove.

9. Tread (10) according to any one of Claims 1 to 7, **characterized in that** at least one intermediate rib is provided with wide grooves oriented transversely or obliquely.

10. Tread (10) according to any one of Claims 1 to 7, **characterized in that** all the intermediate ribs (51, 52, 53) are provided with fine grooves (61, 62, 63).

11. Tread (10) according to any one of Claims 1 to 10, **characterized in that** the fine grooves (61, 62, 63) formed on the intermediate ribs (51, 52, 53) have widths that vary between the tread surface when new and the bottom of these fine grooves (61, 62, 63), while respecting, between the tread surface and the bottom, the mathematical relationship: $0.04\sqrt{B1.H1}.$

**FIG.1**

COUPE SELON II-II
**FIG.2**

**FIG.3**

**FIG.5**

**FIG.4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2015197429 A1
- EP 2952362 A1
- EP 0668173 A1